# EUROPÄISCHE PATENTANMELDUNG

(11) **EP 1 405 832 A1**
(43) Veröffentlichungstag der Anmeldung: **07.04.2004**
(21) Anmeldenummer: 02450224.7
(22) Anmeldetag: 04.10.2002
(51) Int. Cl.: C03B 33/03, B65G 49/06

(54) **Verfahren und Vorrichtung zum Bewegen und Positionieren von Glastafeln**

(71) Anmelder: Lisec, Peter, 3363 Amstetten-Hausmening (AT)
(72) Erfinder: Lisec, Peter, 3363 Amstetten-Hausmening (AT)
(74) Vertreter: Beer, Manfred, Dipl.-Ing.

(57) **Zusammenfassung**

Bei einer Anlage zum Zerteilen von Glastafeln in Glastafel-Zuschnitte ist wenigstens eine Trennstelle (A, B) vorgesehen. Um eine zu teilende Glastafel oder einen Glastafel-Zuschnitt in eine definierte Lage auszurichten sind am Rand der Auflageflächen (I, II) Anlagekanten (21, 44, 45) vorgesehen. Um Glastafeln und Glastafel-Zuschnitte in Anlage an die Anlagekanten (21, 44, 45) zu bewegen sind die Tische (I, II) zu den Anlagekanten (21, 44, 45) hin abfallend ausgerichtet, sodass die Glastafeln und Glastafel-Zuschnitte auf zwischen den Glastafeln und Glastafel-Zuschnitten und den Tischen (I, II) erzeugten Luftkissen in Anlage an die Anlagekanten (21, 44, 45) gleiten. An den Anlagekanten (21, 45) anliegende Glastafeln bzw. Glastafel-Zuschnitte werden mit im Bereich der Anlagekanten (21, 45) vorgesehenen Förderbändern (20) kraftschlüssig gekuppelt und dann zur nach dem Tisch (I, II) angeordneten Trennstelle (A, B) bewegt. Wenn zwei Trennstellen (A, B) vorgesehen sind, ist der Tisch (II) zwischen den beiden Trennstellen (A, B) so schrägstellbar, dass ein als Referenzpunkt (43) dienender Schnittpunkt zwischen zwei Anlagekanten (44, 45) der tiefste Punkt des Tisches (II) ist.

## Beschreibung

Die Erfindung betrifft ein Verfahren und eine Vorrichtung zum Bewegen und Positionieren von Glastafeln im Zusammenhang mit dem Zerteilen von Glastafeln (Glasschneiden). Die hier in Betracht gezogenen Glastafeln sind beispielsweise Tafelglas (Float-Glas) und Verbundglas.

Die bekannten Vorrichtungen zum Teilen von Tafelglas ("Glasschneidetische"), wie sie beispielsweise aus der EP 0 564 758 A bekannt sind, besitzen zum Bewegen und Positionieren der Glastafeln Förderbänder und/oder Förderwellen, die in die Auflageflächen des Glasschneidetisches eingelassen sind und die über die Auflagefläche angehoben werden, wenn eine Glastafel zu transportieren ist.

Solche Förderbänder sind auch bei Vorrichtungen zum Teilen von Verbundglas (WO 95/16640 A = EP 0 708 741 A) bekannt.

Zum Bewegen von Glastafeln auf Glasschneidetischen ist es weiters bekannt, an der Schneidbrücke Mitnehmer für die Glastafeln vorzusehen. Bekannt sind an der Schneidbrücke befestigte Sauger (EP 0 192 290 A) oder am Rand einer Glastafel anlegbare Mitnehmer (US-A-5,944,244).

Glastafeln müssen auf Glasschneidetischen nicht nur genau, sondern auch rasch positioniert werden. Dies ist mit den bekannten Vorrichtungen nicht oder nur mit beträchtlichem Aufwand möglich. Dabei ist zu bedenken, dass Glastafeln mit einem Gewicht bis zu 1000 kg (Verbundglas) zu bewegen und genau zu positionieren sind. Des weiteren ist zu berücksichtigen, dass Glastafeln auf Glasschneidetischen in unterschiedliche Richtungen bewegt werden müssen, beispielsweise um X- und Y-Schnitte auszuführen.

Der Erfindung liegt die Aufgabe zu Grunde, ein Verfahren und eine Vorrichtung der eingangs genannten Gattung anzugeben, die ein genaues, rasches und einfaches Bewegen von Glastafeln (Tafelglas und Verbundglas) beim Positionieren derselben erlauben und die ohne aufwändige Fördermittel für das Bewegen und Positionieren der zu teilenden Glastafeln oder weiter zu teilender Glastafel-Zuschnitte auskommen.

Diese Aufgabe wird erfindungsgemäß mit einem Verfahren gelöst, das die Merkmale des Anspruches 1 aufweist.

Was die Vorrichtung anlangt, wird diese Aufgabe mit einer Vorrichtung gelöst, welche die Merkmale des Vorrichtungshauptanspruches aufweist.

Bevorzugte und vorteilhafte Weiterbildungen des erfindungsgemäßen Verfahrens einerseits und der erfindungsgemäßen Vorrichtung anderseits sind Gegenstand der Unteransprüche.

Bei dem erfindungsgemäßen Verfahren wird so gearbeitet, dass die Auflagefläche, auf der die zu bewegende Glastafel liegt, so schräg gestellt (geneigt)ist oder wird, dass sie in Richtung auf eine definierte Anlagekante hin abfällt, und die auf ihr liegende Glastafel bis zu dieser Anlagekante gleitet. Die Glastafel oder ein Glastafel-Zuschnitt sind dann durch Anliegen an der wenigstens einen Anlagekante positioniert.
Durch Wahl des Winkels der Neigung der Auflagefläche und durch Wahl des Reibungskoeffizienten zwischen Glastafel und Oberfläche der Auflagefläche kann unterschiedlich großen und schweren Glastafeln Rechnung getragen werden.

In einer bevorzugten Ausführungsform gleiten die Glastafeln auf einem zwischen der Auflagefläche und der Glastafel gebildeten Luftkissen. Die Verwendung eines Luftkissens als Gleitfläche für die Glastafeln hat auch den Vorteil, dass man die Reibung zwischen Glastafel und Auflagefläche durch Einstellen des Drucks, mit dem Luft aus den Luftkissenöffnungen in der Auflagefläche ausströmt, auf den jeweils gewünschten Wert einstellen und bei Bedarf während der Bewegung einer Glastafel ändern kann. Dies bietet z.B. die Möglichkeit, am Beginn einer Bewegung der Glastafel die Reibung zu verringern und die Reibung vor dem Ende der Bewegung der Glastafel, beispielsweise wenn sie sich der Referenzlinie (Anlagekante) annähert, durch Absenken des Drucks der das Luftkissen bildenden Luft zu erhöhen.

Bei der erfindungsgemäßen Verfahrensweise wird in einer Ausführungsform so gearbeitet, dass eine an wenigstens einer eine Referenzlinie bildenden Anlagekante anliegende Glastafel durch kraftschlüssiges Kuppeln der Glastafel mit einem Fördermittel um definierte Strecken bewegt wird, um sie definiert einer Trennstelle zuzuführen, an der die Glastafel geschnitten und gebrochen wird.

Das erfindungsgemäße Verfahren erlaubt es auch, geteilte Glastafeln, insbesondere Teile von Glastafeln, die nach dem Schnitt der Traveren (X-Schnitte) erhalten werden, weiter zu bewegen und zu positionieren und so der nächsten Trennstelle, in der Y-Schnitte ausgeführt werden, genau positioniert zuzuführen.

Das Positionieren von Glastafel-Zuschnitten erfolgt vorzugsweise so, dass ein Glastafel-Zuschnitt durch Schrägstellen der Auflagef läche nach der ersten Trennstelle mit einer seiner Ecken in einen Referenzpunkt bewegt wird, der beispielsweise durch zwei im Winkel von 90° zueinander stehende Anlagekanten definiert ist.

Insoweit die Vorrichtung betroffen ist, sind die Auflagetische vor und nach den Trennvorrichtungen, also der Zuführtisch der ersten Trennvorrichtung (für X-Schnitte), der zweite Tisch, mit dem die Glastafel-Zuschnitte nach dem ersten Schnitt (X-Schnitt) zur zweiten Trennvorrichtung (für Y-Schnitte) bewegt werden, und schließlich der Auslauftisch in Richtung auf wenigstens eine Anlagekante abfallend schräggestellt oder gegebenenfalls zusätzlich kippbar ausgebildet, so dass sie unter einem Winkel zur Horizontalen ausgerichtet sind.

Des weiteren ist bei der erfindungsgemäßen Vorrichtung am Rand jedes Tisches wenigstens eine Anlagekante als Referenzlinie ausgebildet, die in der Regel zur nachgeordneten Trennstelle normal ausgerichtet ist. Diese Anlagekante (Referenzlinie) ist beispielsweise ein Förderband. Eine vom Förderband entlang der Anlagekante zu bewegende Glastafel oder ein Glastafel-Zuschnitt werden mit dem jeweiligen Förderband gekuppelt. Dieses Kuppeln erfolgt beispielsweise über wenigstens einen Kupplungs-Sauger, der auf einer Schiene parallel zum Förderband geführt ist, und nach dem Anlegen an die Glastafel in Richtung auf das Förderband zu belastbar ist, so dass zwischen Förderband und Glastafel ein Kraftschluss entsteht, der es erlaubt, die Glastafel mit Hilfe des Förderbandes auf der Auflagefläche gleitend zu bewegen. Ein gesonderter Antrieb für den Schlitten, der den Kupplungs-Sauger trägt, um diesen entlang der Anlagekante zu bewegen ist nicht vorgesehen.

Weitere Einzelheiten und Merkmale sowie Vorteile der Erfindung ergeben sich aus der nachstehenden Beschreibung eines bevorzugten Ausführungsbeispieles unter Bezugnahme auf die Zeichnungen, in der schematisch eine Schneidanlage (für Verbundglas) gezeigt ist. Es zeigt:
Fig. 1 eine (Verbund-)Glasschneideanlage in Draufsicht,
Fig. 2 eine (Verbund-)Glasschneideanlage in Schrägansicht und
Fig. 3 schematisch einen Sauger zum Kuppeln einer Glastafel in einem Förderband.

Die Schneidanlage besitzt einen ersten Tisch I, auf den in Richtung des Pfeiles 10 Glastafeln aufgelegt werden. Der Tisch I kann auch um seine einlaufseitige Kante 11 hochklappbar sein, so dass auf ihm Glastafeln aus einem Glastafellager auf Auflagehaken 12 an diesem Rand 11 aufgestellt und dann durch Zurücklappen des Tisches I in eine im wesentlichen horizontale Ausgangs-Lage umgelegt werden können.

Auf den mit den Haken 12 bestückten Rand 11 gegenüberliegenden Rand 13 schließt an den Tisch I ein ortsfester Streifen 14 an.

Der Tisch I und der ortsfeste Streifen 14 sind vorzugsweise als Luftkissentische ausgebildet, d.h. es sind über ihre Auflageflächen verteilt Öffnungen 15 (nur symbolisiert angedeutet) vorgesehen, aus denen Druckluft ausströmt, so dass eine auf dem Tisch I liegende Glastafel auf einem Luftkissen schwimmt.
Die Auflagefläche des Tisches I kann so wie die der noch zu erläuternden Tische II und III auf der Auflagefläche des Tisches I, z.B. mit Rollen bestückt sein, so dass eine auf der Auflagefläche liegende Glastafel leicht bewegt werden kann.

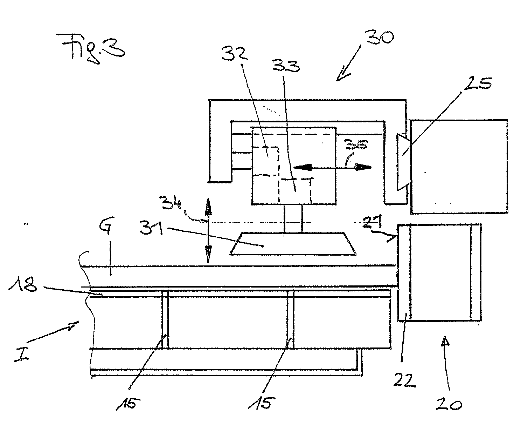

Der Tisch I, genauer seine Auflagefläche ist in seiner Grundstellung (Ausgangs-Lage) zur Anlagekante 21 hin abfallend geneigt oder um den im Bereich der Stoßstelle 16 zwischen dem Tisch I und dem Streifen 14 liegenden Rand 13 kippbar, um den Tisch I so auszurichten, dass er zur Anlagekante I hin abfallend geneigt ist. Beispielsweise ist der mit den Haken 12 bestückte Rand 11 des Tisches I höher oder anhebbar, so dass der Tisch I in Richtung auf den Streifen 14 hin abfällt.
Eine auf dem durch Kippen schräggestellten oder von vornherein geneigten Tisch I liegende Glastafel gleitet auf dem Luftkissen, nach "unten", bis sie an der durch ein Trum 22 eines Förderbandes 20 gebildete Anlagekante 21 anliegt. Diese Anlagekante 21, die durch das Förderband 20 gebildet wird, bildet eine Referenzlinie und definiert die Lage der Glasscheibe, bevor sie zur Trennstelle A (Trennvorrichtung für Glas oder Verbundglas) bewegt wird. Wenn die Auflagefläche des Tisches I zur Anlagekante 21 in der Ausgangs-Lage hin abfallend geneigt ist, ist die Trennvorrichtung A ebenfalls geneigt und schließt mit der Horizontalen den gleichen Winkel ein wie der Tisch I (sie steigt von der Anlagekante 21 weg an). Für eine sichere Bewegung von Glastafeln auf Tisch I (und den weiteren Tischen II und III) genügen - insbesondere bei Luftkissentischen - kleine Winkel. So kann beispielsweise der Rand 11 des Tisches I bei einer Tischlänge von 3-5 m um etwa 2 cm höher sein als der Rand 13.
Um die Glastafel G auf dem Tisch I zu bewegen (vgl. Fig. 3), ist auf einer parallel zum Förderband 20 ausgerichteten, gestellfesten Führungsschiene 25 wenigstens ein Schlitten 30 frei verschiebbar geführt, an dem wenigstens ein Sauger 31 angeordnet ist. Der Sauger 31 ist zum Anlegen an die Glastafel G, die auf der beispielsweise von einer Filzlage 18 gebildeten Auflagefläche des Tisches I liegt, durch eine im Schlitten 30 eingebauten Druckmittelmotor 33 absenkbar (Pfeil 34, Fig.3) und kann dann mit Hilfe eines weiteren (Pfeil 35, Fig.3) im Schlitten 30 eingebauten Druckmittelmotors 32 so belastet werden, dass er die Glastafel G gegen das die Anlagekante 21 (Referenzlinie) bildende Trum 22 des Förderbandes 20 zieht, wodurch die Glastafel G durch Kraftschluss mit dem Förderband 20 gekuppelt wird. Durch Bewegen des Förderbandes 20 kann die Glastafel G auf dem Tisch I bewegt werden, wobei die Reibung durch das Luftkissen des Tisches I klein gehalten wird.

Knapp vor der Schneidstelle A ist am Tisch I eine Vorrichtung 35 vorgesehen, welche die vordere Kante einer zu bewegenden Glastafel erfasst, um eine Referenzlage zu definieren. Anstelle dieser Vorrichtung kann auch ein einfacher Anschlag vorgesehen sein, der nach dem Festlegen der Referenzlage abgesenkt wird.

Durch Bewegen des Föderbandes 20, mit dem die Glastafel über den Schlitten 30 mit Sauger 31 gekuppelt ist (ein gesonderter Antrieb für den Schlitten 30 kann zwar vorgesehen vorgesehen sein, ist aber in der Regel entbehrlich), wird die Glastafel schrittweise zur Trennstelle A bewegt und es werden in der Glastafel die X-Schnitte (Traveren) ausgeführt. Das Ausmaß des Vorschubes der Glastafel G zur Schneidstelle A wird mit einem mit dem Förderband 20, insbesondere mit dessen Antrieb, gekuppelten Weggeber (Inkrementalgeber) erfasst und aufgrund der so erfassten Wege der Glastafel diese gegenüber der Trennstelle A so ausgerichtet, dass sie an der gewünschten Stelle geteilt wird. Bevor mit dem Verschieben der Glastafel G begonnen wird wird der Tisch I in seine zur Ausrichtung der Trennstelle A parallele Lage bewegt (gekippt).

Die so erhaltenen Glasstreifen (Glas-Zuschnitte) gelangen auf den Tisch II. Dieser Tisch II ist in seiner Grund-Stellung, die er beim Ausführen eines Trennschnittes in der Trennvorrichtung A einnimmt in einer Ebene mit dem Tisch I ausgerichtet, d.h. er ist zur Horizontalen um den selben Winkel geneigt wie der Tisch I und die Trennvorrichtung A, wobei er zu seiner Anlagekante 44 hin abfällt. Diese Ausrichtung des Tisches II kann auch durch Anheben im Bereich seines der Trennstelle A benachbarten Randes 40 herbeigeführt werden. Zum Fördern eines Glastafel-Zuschnittes von der Trennvorrichtung A weg ist der Tisch II zusätzlich nach jedem Trennvorgang so schrägstellbar, dass ein Glastafel-Zuschnitt auf dem Tisch II, der jetzt auch von der Trennstelle A bzw. seinem Rand 40 weg abfallend ausgerichtet ist, aus der zunächst unmittelbar rechts neben der Schneidstelle A angeordneten Lage in die in der Zeichnung strichliert gezeigte Lage gleitet. Hiezu wird der Tisch II im Bereich der neben der Trennstelle A liegenden Kante 40 gehoben. Zusätzlich kann der Tisch II auch im Bereich seiner Kante 41 angehoben werden, so dass der Glastafel-Zuschnitt sicher in Anlage an beiden Anlagekanten 44,45, die beide Trume von Förderbändern 20 renzpunkt 43, im Beispiel dem Schnittpunkt der beiden Anlagekanten 44,45, angeordnet. In dieser Lage ist die den Referenzpunkt 43 bildende Ecke der tiefste Punkt des Tisches II, da (im Ergebnis) die Ecke 46 des Tisches angehoben worden ist. Durch einen Endschalter 47 wird festgestellt, dass ein Glastafel-Zuschnitt an der Referenzkante 45 anliegt. Sobald das festgestellt ist, wird die der Schneidstelle A benachbarte Kante 40 und auch die hiezu normal stehende Kante 41 des Tisches II abgesenkt, so dass der Tisch II wieder mit dem Tisch I fluchtend (in einer Ebene liegend) ausgerichtet ist.

Im gezeigten Ausführungsbeispiel sind an beiden Anlagekanten 44,45, des Tisches II Förderbänder 20 vorgesehen, denen Sauger 31 auf Schlitten 30 (vgl. Fig. 3) zugeordnet sind, wie sie zuvor für den Tisch I beschrieben worden sind. Wesentlich ist dabei der Sauger 31 an der zur Schneidstelle A parallelen, dieser gegenüberliegenden (entfernten) und zur Schneidstelle B normal stehenden Anlagekante 45 des Tisches II, da über diesen Schlitten 30 mit wenigstens einem Sauger 31 und dem zugeordneten Förderband 20 die Glastafel schrittweise zur Trennstelle B (Trennvorrichtung) transportiert wird, um die Y-Schnitte auszuführen. Auch vor der Trennstelle B kann ein Sensor 35 zum Erfassen der vorderen Kante eines Glastafel-Zuschnittes vorgesehen sein.

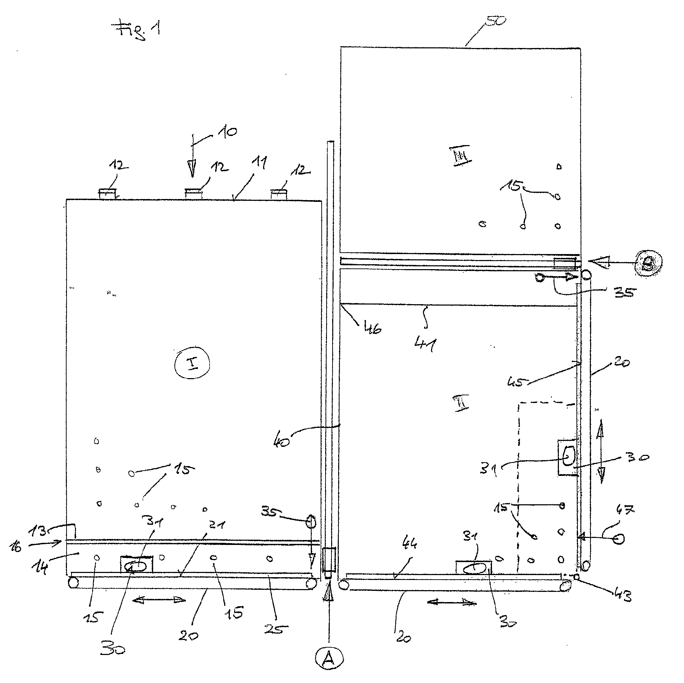

Das Förderband 20 an der zur Trennstelle A senkrechten Anlagekante 44 des Tisches II hat im wesentlichen die Aufgabe, die Bewegung eines Glastafel-Zuschnittes in den Referenzpunkt 43 zu unterstützen, insbesondere wenn sich ein Glastafel-Zuschnitt schrägstellen, und mit einer oder zwei Ecken an einem oder beiden die Anlagekanten 44,45 bildenden Förderbändern 20 anliegen sollte. Der in dem Ausführungsbeispiel von Fig. 1 an der Anlagekante 41 vorgesehene Schlitten 30 mit Sauger 31 ist nicht unbedingt erforderlich und wird in der Regel nicht vorgesehen sein.

Der nach der Trennstelle B angeordnete Tisch III, fluchtet mit dem Tisch II und ist zunächst von der Schneidstelle B weg ansteigend schräg gestellt. Wesentlich ist, dass die Tische II und III in einer (beispielsweise schrägen) Ebene liegen. Um den Abtransport der nach dem Teilen durch die Trennstelle B erhaltenen Glastafelder nach dem Teilen durch die Trennstelle B erhaltenen Glastafel-Zuschnitte zu erleichtern, kann der Tisch III nach dem Ausführen eines Brechvorganges im Bereich seiner Kante 50 abgesenkt werden.

Im gezeigten Ausführungsbeispiel ist an jeder der Anlagekanten 21 und 45 je Schlitten 30 mit wenigstens einem Sauger 31 (an den Schlitten 30 können auch je zwei Sauger 31 vorgesehen sein) vorgesehen. Es ist darauf hinzuweisen, dass dies ein Minimalerfordernis ist, da an der Anlagekante 21 und/oder der Anlagekante 45 auch zwei oder mehr Schlitten 30 mit wenigstens einem Sauger 31 vorgesehen sein können, um große und/oder schwere Glastafeln sicher zu bewegen. Meist genügt aber ein Schlitten 30 je Anlagekante, insbesondere wenn dieser im Mittelbereich der Glastafel G angreift und diese mit hinreichend großer Kraft gegen das die Anlagekante 21, 44, 45 (Referenzlinie) bildende Trum 22 des jeweiligen Förderbandes 20 zieht. Wenn beispielsweise zwei Schlitten 30 mit je wenigstens einem Sauger 31 an den Anlegekanten 21 und 45 vorgesehen sind, können diese auch abwechselnd an Glastafeln bzw. an Glastafel-Zuschnitten angreifen.

Um die Schlitten 30 in ihre Ausgangslage zurückzubewegen, wird das jeweilige Förderband 20 umgesteuert, d.h. es läuft in die entgegengesetzte Richtung und der Schlitten 30 wird über einen Mitnehmer mit dem Förderband 20 gekuppelt, indem der Mitnehmer gegen das Förderband 20 gedrückt wird.

Das Bewegen der Tische, insbesondere der Tische II und III erfolgt bevorzugt durch Bewegen ihrer Rahmen, die unterhalb ihrer Auflageflächen angeordnet sind, indem an den Rahmen am Boden abgestützte Druckmittelzylinder angreifen.

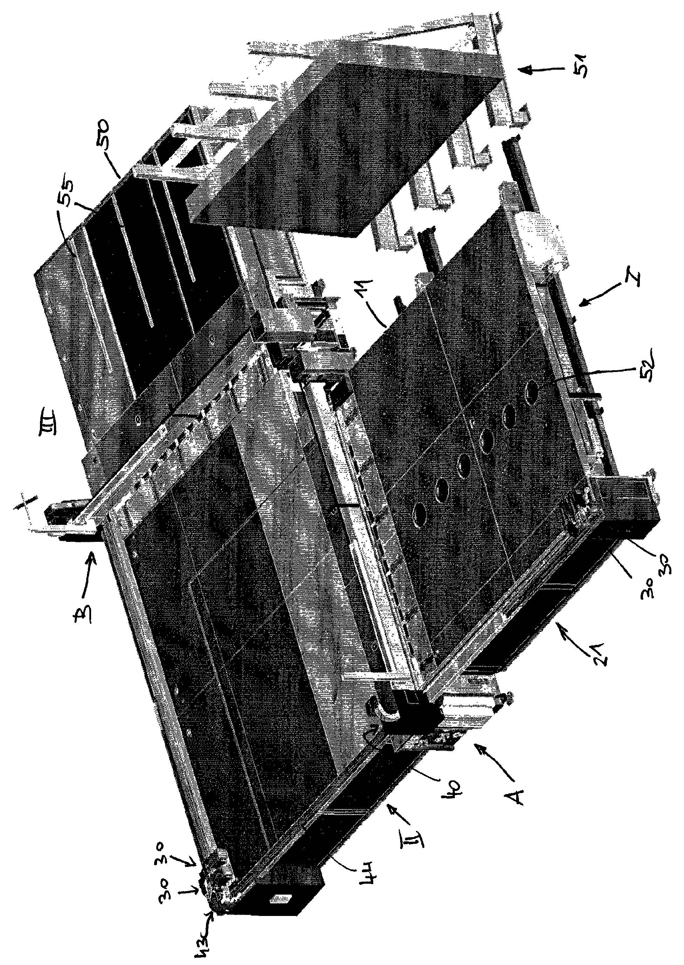

Der Arbeitsablauf der (Verbund-)Glasschneideanlage mit den schrägstellbaren oder in ihrer Ausgangslage schräggestellten Tischen kann beispielhaft und mit Bezug auf die Fig. 2 wie folgt beschrieben werden:
1.) Tisch I wird um seinen Rand 11 hochgeklappt, um eine Glastafel aus einem Stapel 51 von Glastafeln zu übernehmen. Die Glastafel wird am Tisch I übere mehrere Sauger 52 festgelegt.
2.) Der Tisch I wird in die zur Anlagekante 21 hin abfallende Ausgangs-Lage zurückgeklappt. Die Glastafel gleitet dann auf dem Luftkissen zur Anlagekante 21 hin.
3.) In dieser Position wird die Glastafel durch den Sauger 31 am Schlitten 30 (oder durch Sauger an zwei Schlitten) kraftschlüssig mit dem Förderband 20 gekuppelt.
4.) Durch Betätigen des Förderbandes 20 wird die Glastafel vorgeschoben bis sie relativ zur Trennvorrichtung A für einen Trennvorgang richtig ausgerichtet ist.
5.) Dann wird bei miteinander fluchtenden Tischen I und II (beide sind zur Anlagekante 21 bzw. 44 hin abfallend geneigt) durch die Trennvorrichtung A ein Glastafel-Zuschnitt (Travere) von G 1 abgetrennt. Der so erhaltene Glastafel-Zuschnitt ("Travere") liegt auf dem Tisch II.
6.) Tisch II wird im Bereich seiner der Trennvorrichtung A benachbarten Kante 40 angehoben, sodass er auch auf die Anlagekante 45 hin schräg abfällt.
7.) Der Glastafel-Zuschnitt bewegt sich (gleitet) auf dem Tisch II in eine Position, in der er an der Anlagekante 45 und an der Anlagekante 44 anliegt.
8.) Durch Anheben des Tisches II auch im Bereich seiner der Trennstelle B benachbarten Kante 41 wird der Tisch II so schräggestellt, dass seine Ecke zwischen den Anlagekanten 44, 45 der tiefste Punkt ist. Dadurch wird sichergestellt, dass der Glastafel-Zuschnitt mit ihrer Ecke im Referenzpunkt 43 angeordnet ist, und mit zwei zu einer seiner Ecken hin verlaufenden Rändern an den Anlagekanten 44, 45 anliegt.
9.) Beim Bewegen eines Glastafel-Zuschnittes auf dem Tisch II wird das Förderband 20 betätigt, um diese Bewegung zu unterstützen, insbesondere bei schräggestelltem Glastafel-Zuschnitt.
10.) Durch den Sauger 31 am Schlitten 30 im Bereich der Anlagekante 45 wird der Glastafel-Zuschnitt am Förderband 20 im Bereich der Anlagekante 45 kraftschlüssig festgelegt, während er sich mit seiner Ecke im Referenzpunkt 43 befindet.
11.) Der Tisch II wird in seine mit Tisch I fluchtende nur zur Anlagekante 44 hin abfallende Ausgangs-Lage zurückbewegt. Der Tisch II steigt in dieser Lage von der Anlagekante 44 zum Rand 41 hin also zur Trennvorrichtung B hin an.
12.) Durch Betätigen des Förderbandes 20 wird der Glastafel-Zuschnitt zur Trennvorrichtung B vorgeschoben. schnitt weiter in Zuschnitte geteilt.
14.) Während dieses Trennvorganges sind die Tische II und III in einer Ebene von der Anlagekante 44 des Tisches II zur Kante 50 des Tisches III hin ansteigend ausgerichtet.
15.) Zum Abtransport von nach der Trennvorrichtung B anfallenden Zuschnitten kann der Tisch III so geneigt werden , dass er von der Trennvorrichtung B zum Rand 50 hin abfallend ausgerichtet ist. Glastafel-Zuschnitte können vom Tisch III mit Hilfe von Hebeleisten 55 im wesentlichen lotrecht aufgerichtet werden.

Zusammenfassend kann ein Ausführungsbeispiel der Erfindung wie folgt beschrieben werden:

Bei einer Anlage zum Zerteilen von Glastafeln in Glastafel-Zuschnitte ist wenigstens eine Trennstelle A, B vorgesehen. Um eine zu teilende Glastafel oder einen Glastafel-Zuschnitt in eine definierte Lage auszurichten sind am Rand der Auflageflächen I, II Anlagekanten 21, 44, 45 vorgesehen. Um Glastafeln und Glastafel-Zuschnitte in Anlage an die Anlagekanten 21, 44, 45 zu bewegen sind die Tische I, II zu den Anlagekanten 21, 44, 45 hin abfallend ausgerichtet, sodass die Glastafeln und Glastafel-Zuschnitte auf zwischen den Glastafeln bzw. Glastafel-Zuschnitten und den Tischen I, II erzeugten Luftkissen in Anlage an die Anlagekanten 21, 44, 45 gleiten. An den Anlagekanten 21, 45 anliegende Glastafeln bzw. Glastafel-Zuschnitte werden mit im Bereich der Anlagekanten 21, 45 vorgesehenen Förderbändern 20 kraftschlüssig gekuppelt und dann zur nach dem Tisch I, II angeordneten Trennstelle A, B bewegt. Wenn zwei Trennstellen A, B vorgesehen sind, ist der Tisch II zwischen den beiden Trennstellen A, B so schrägstellbar, dass ein als Referenzpunkt 43 dienender Schnittpunkt zwischen zwei Anlagekanten 44, 45 der tiefste Punkt des Tisches II ist.

## Patentansprüche

1. Verfahren zum Bewegen und Positionieren von Glastafeln (G) und Glastafel-Zuschnitten beim Teilen von Glastafeln (G) auf einer Vorrichtung zum Teilen von Glastafeln (G) mit wenigstens einer Trennstelle (A, B) und mit beidseits der Trennstelle angeordneten Auflageflächen (I, II, III) für die zu teilende Glastafel (G) und für nach dem Teilen derselben erhaltene Glastafel-Zuschnitte, **dadurch gekennzeichnet, dass** eine Glastafel bzw. ein Glastafel-Zuschnitt auf einer Auflagefläche (I, II) , die zur Horizontalen in Richtung auf eine Anlagekante (21, 45) abfallend geneigt ist, bis in eine durch die Anlagekante (21,45 ) definierte Stellung gleiten gelassen wird.

2. Verfahren nach Anspruch 1, **dadurch gekennzeichnet, dass** die Glastafel (G) auf einem zwischen ihr und der Auflagefläche (I, II) gebildeten Luftkissen gleitet.

3. Verfahren nach Anspruch 1 oder 2, **dadurch gekennzeichnet, dass** die wenigstens eine Auflagefläche (I, II) zum Bewegen der Glastafel (G) in eine durch eine Anlagekante (21, 45) definierte Lage zu dieser Anlagekante (21, 45) hin abfallend ausgerichtet ist oder ausgerichtet wird.

4. Verfahren nach einem der Ansprüche 1 bis 3, **dadurch gekennzeichnet, dass** die vor der ersten Trennstelle (A) angeordnete Auflagefläche (I) zur vor der Trennstelle (A) angeordneten Anlagekante (21) hin abfallend ausgerichtet ist oder ausgerichtet wird.

5. Verfahren nach einem der Ansprüche 1 bis 4, **dadurch gekennzeichnet, dass** die zwischen den Trennstellen (A,B) angeordnete Auflagefläche (II) zur vor der Trennstelle (B) angeordnete Anlagekante (44, 45) hin abfallend ausgerichtet ist oder ausgerichtet wird.

6. Verfahren nach einem der Ansprüche 1 bis 5 , **dadurch gekennzeichnet, dass** die Anlagekante (21, 45) im wesentlichen normal zur Wirkrichtung der nachgeordneten Trennstelle (A, B) ausgerichtet ist.

7. Verfahren nach einem der Ansprüche 1 bis 6 , **dadurch gekennzeichnet, dass** die Glastafel (G) im Bereich ihres an der Anlagekante (21, 45) anliegenden Randes erfasst und zur Trennstelle (A, B) bewegt wird.

8. Verfahren nach Anspruch 7, **dadurch gekennzeichnet, dass** die Glastafel (G) schrittweise zur Trennstelle (A, B) bewegt und nach jedem Vorschubschritt ein Trennvorgang ausgeführt wird.

9. Verfahren nach Anspruch 7 oder 8, **dadurch gekennzeichnet, dass** die Glastafel (G) mit ihrem an der Anlagekante (21, 45) anliegenden Rand kraftschlüssig mit einer Fördereinrichtung (20) gekuppelt wird.

10. Verfahren nach Anspruch 9, **dadurch gekennzeichnet, dass** die Glastafel (G) von der Fördereinrichtung (20) in einer zur Wirkrichtung der Trennstelle (A, B) normalen Richtung bewegt wird.

11. Verfahren nach einem der Ansprüche 1 bis 10, **dadurch gekennzeichnet, dass** zwei Trennstellen (A, B) mit zueinander senkrecht stehenden Wirkrichtungen vorgesehen sind und dass die Auflagefläche (II) zwischen den beiden Trennstellen (A, B) schräg ausgerichtet wird, um einen durch Trennen der Glastafel (G) in der Trennstelle A gehaltenen Glastafel-Zuschnitt in eine definierte Lage (Referenzlage) gleiten zu lassen.

12. Verfahren nach Anspruch 11, **dadurch gekennzeichnet, dass** die Referenzlage durch Anliegen des Glastafelzuschnitts an zwei zueinander senkrecht stehende Anlagekanten (44, 45) definiert wird.

13. Verfahren nach Anspruch 12, **dadurch gekennzeichnet, dass** die Ecke des Glastafel-Zuschnitts die an dem von der ersten Trennstelle entfernt liegenden Rand des Glastafel-Zuschnittes angeordnet ist, im Schnittpunkt (43) der Anlagenkanten (44,45) angeordnet wird.

14. Verfahren nach einem der Ansprüche 11 bis 13, **dadurch gekennzeichnet, dass** die zweite Auflagefläche (II) zunächst im Bereich ihres ersten Trennstelle (A) benachbarten Randes (40) und dann zusätzlich an einem zu diesen Rand (40) senkrecht stehenden, der zweiten Trennstelle (B) benachbarten Rand (41) angehoben wird, sodass sie schlussendlich zum Schnittpunkt (43) der Anlagekanten (44, 45) hin schräg abfallend angeordnet ist.

15. Verfahren nach einem der Ansprüche 1 bis 14, **dadurch gekennzeichnet, dass** die vor der ersten Trennstelle (A) angeordnete Auflagefläche (I) vor dem Fördern einer Glastafel zur Trennstelle hin eine zur Wirkrichtung der Trennstelle A parallele Lage gebracht wird.

16. Verfahren nach Anspruch 15, **dadurch gekennzeichnet, dass** die Auflagefläche (I) in eine mit der Horizontalen einen Winkel einschließende Lage gebracht wird.

17. Verfahren nach einem der Ansprüche 1 bis 16, **dadurch gekennzeichnet, dass** vor dem Bewegen eines Glastafel-Zuschnittes auf der zwischen den Trennstellen (A, B) angeordneten Auflagefläche (II) in Richtung auf die zweite Trennstelle (B) hin diese Auflagefläche im Bereich ihres der ersten Trennstelle (A) benachbarten Randes (40) abgesenkt wird.

18. Verfahren nach einem der Ansprüche 1 bis 17, **dadurch gekennzeichnet, dass** beim Ausführen der Trennvorgänge in der zweiten Trennstelle (B), die im Anschluss an die zweite Trennstelle (B) angeordneten Auflagefläche (III) mit der vor der zweiten Trennstelle (B) angeordneten Auflagefläche (II) in eine Ebene ausgerichtet ist oder ausgerichtet wird.

19. Verfahren nach Anspruch 18, **dadurch gekennzeichnet, dass** die Auflageflächen (II) und (III)in eine mit der Horizontalen einen Winkel einschließende Lage ausgerichtet werden.

20. Verfahren nach Anspruch 18 oder 19, **dadurch gekennzeichnet, dass** zum Abtransportieren von Glastafel-Zuschnitten von dem nach der zweiten Trennstelle (B) angeordneten Auflagefläche (III) diese von der Trennstelle (B) weg abfallend ausgerichtet wird.

21. Verfahren nach einem der Ansprüche 1 bis 20, **dadurch gekennzeichnet, dass** zwischen der Auflagefläche (I, II, III) und einer Glastafel (G) und und einem Glastafel-Zuschnitt ein Luftkissen ausgebildet wird.

22. Vorrichtung zum Durchführen des Verfahrens nach einem der Ansprüche 1 bis 21 mit wenigstens einer Trennvorrichtung (A, B) und als Tisch ausgebildeten Auflagefläche (I, II, III) und mit wenigstens einer Einrichtung zum Fördern von Glastafeln (G) auf dem Tisch (I, II, III), **dadurch gekennzeichnet, dass** der wenigstens eine Tisch (I, II) in Richtung auf eine Anlagekante (21, 44, 45) hin abfallend ausrichtbar ist oder ausgerichtet ist.

23. Vorrichtung nach Anspruch 22, **dadurch gekennzeichnet, dass** der Tisch (I, II) durch Anheben im Bereich seines der Anlagekante (21, 44, 45) gegenüberliegenden Randes (11, 40, 41) abfallend ausrichtbar ist.

24. Vorrichtung nach Anspruch 22 oder 23, **dadurch gekennzeichnet, dass** im Bereich der Anlagekante (21, 45) eine Fördereinrichtung (20) für Glastafeln (G) bzw. Glastafel-Zuschnitte vorgesehen ist.

25. Vorrichtung nach Anspruch 24, **dadurch gekennzeichnet, dass** die Fördereinrichtung ein Endlosförderband (20) umfasst.

26. Vorrichtung nach Anspruch 25, **dadurch gekennzeichnet, dass** ein Trum (22) des Förderbandes (20) die Anlagekante (21, 44, 45) bildet.

27. Vorrichtung nach einem der Ansprüche 24 bis 26, **dadurch gekennzeichnet, dass** die mit der Fördereinrichtung (20) ausgestattete Anlagekante (21, 45) zur dem Tisch (I, II) benachbarten Trennvorrichtung (A, B) normal ausgerichtet ist.

28. Vorrichtung nach einem der Ansprüche 24 bis 27, **dadurch gekennzeichnet, dass** eine Vorrichtung (30, 31) zum kraftschlüssigen Kuppeln einer Glastafel (B) bzw. eines Glastafel-Zuschnittes mit der Fördereinrichtung (20) vorgesehen ist.

29. Vorrichtung nach Anspruch 28, **dadurch gekennzeichnet, dass** die Vorrichtung zum kraftschlüssigen Kuppeln wenigstens einen an der nach oben weisenden Fläche der Glastafel (G) bzw. des Glastafel-Zuschnittes angreifenden Mitnehmer (31) aufweist, mit dem die Glastafel (G) bzw. de Glastafel-Zuschnittes gegen das die Anlagekante (21, 45) bildende Trum (22) des Förderbandes (20) belastbar ist.

30. Vorrichtung nach Anspruch 29, **dadurch gekennzeichnet, dass** der Mitnehmer wenigstens ein Sauger (31) ist.

31. Vorrichtung nach Anspruch 29 oder 30, **dadurch gekennzeichnet, dass** der Mitnehmer (31) über einen Schlitten (30) auf einer zum Förderband (20) parallel ausgerichteten Führungsschiene (25) geführt ist.

32. Vorrichtung nach Anspruch 31, **dadurch gekennzeichnet, dass** der wenigsten einen Sauger (31) im Schlitten (30) durch Druckmittelmotore (32, 33) heb- und senkbar und horizontal verstellbar montiert ist.

33. Vorrichtung nach einem der Ansprüche 22 bis 32, **dadurch gekennzeichnet, dass** der vor der ersten Trennvorrichtung (A) angeordnete Tisch (I) zum Umlegen von Glastafeln (G) in eine im wesentliche lotrechte Lage aufrichtbar und dann wieder umlegbar ist.

34. Vorrichtung nach einem der Ansprüche 22 bis 33, **dadurch gekennzeichnet, dass** der zwischen den beiden Trennvorrichtungen (A, B) angeordnete Tisch (II) mit zwei Anlagekanten (44, 45) ausgebildet ist, wobei diese Anlagekanten (44, 45) jeweils einer der Trennvorrichtung (A, B) gegenüber liegen.

35. Vorrichtung nach einem der Ansprüche 22 bis 34, **dadurch gekennzeichnet, dass** die Auflagefläche der Tische (I, II, III) mit Rollen bestückt ist.

36. Vorrichtung nach einem der Ansprüche 22 bis 34, **dadurch gekennzeichnet, dass** in der Auflagefläche der Tische (I, II, III) Bohrungen (15) münden, die mit Druckluft beaufschlagbar sind.

37. Vorrichtung nach Anspruch 36, **dadurch gekennzeichnet, dass** die Auflagefläche der Tische (I, II, III) durch eine Filzauflage (18) gebildet ist.

38. Vorrichtung nach einem der Ansprüche 22 bis 37, **dadurch gekennzeichnet, dass** die erste Trennvorrichtung (A) mit der Horizontalen einen Winkel ausschließt und dass die dieser Trennvorrichtung (A) benachbartee Tische (I, II) miteinander fluchtend und in ihrer Ausgangs-Lage zur Horizontalen den gleichen Winkel einschließen wie die Trennvorrichtung (A).

39. Vorrichtung nach einem der Ansprüche 22 bis 38, **dadurch gekennzeichnet, dass** die der zweiten Trennvorrichtung (B) benachbarten Tische (II, III) in ihrer Ausgangs-Lage miteinander fluchten und zur Horizontalen den gleichen Winkel einschließen wie die erste Trennvorrichtung (A).
